# EUROPEAN PATENT APPLICATION

(11) **EP 0 973 172 A1**
(43) Date of publication of application: **19.01.2000**
(21) Application number: 98113393.7
(22) Date of filing: 17.07.1998
(51) Int. Cl.: G21C 1/30, G21C 9/02

(54) **Beam pipe with safety function for accelerator-driven nuclear systems**

(71) Applicant: European Community, 2920 Luxembourg (LU)
(72) Inventor: Wider, Hartmut, 21027 Barza(VA) (IT); Schönherr, Heinz, 21038 Leggiuno(VA) (IT)
(74) Representative: Freylinger, Ernest T.

(57) **Abstract**

A beam pipe (46) for guiding in an accelerator-driven nuclear system an accelerated particle beam (44) through a coolant in a primary vessel (12) onto a spallation target (30) comprises, preferably near its tip end (48), a temperature triggered flooding device, including for example a melt-rupture disc. In case of an abnormal temperature increase in the system, the temperature triggered flooding device establishes, below the normal coolant level (16), a flooding communication between the vessel (12) and the interior of the beam pipe (46), thereby flooding the interior of the beam pipe (46) with the coolant (14) contained in the vessel (12).

## Description

### Introduction

The present invention relates to a beam pipe in an accelerator-driven nuclear system, for guiding an accelerated particle beam onto a nuclear fuel target through a vessel filled at least partially with a coolant. It relates in particular to such a beam pipe with an integrated safety function.

Calculations of severe cooling disturbances (such as e.g. "Loss-of-Flow" and "Loss-of-Heat Sink" accidents) and also reactivity accidents in a liquid metal cooled accelerator-driven nuclear (subcritical) system (ADS) show that the switching off of the accelerator or the interruption of the proton beam are the only means of reducing the power to safe levels.

For switching off the accelerator, active and also complex passive systems have been suggested. Active systems will e.g. rely on temperature measurements leading to alarms in the control room when too high values are detected. Complex passive system will e.g. rely on a computer logic that will lead to an automatic shut-off of the accelerator when a certain percentage of thermocouple readings are too high.

There is still a need for simple and easily understandable safety devices for interrupting or switching off the proton beam, in order to further reduce the probability of serious accidents and to make people feel more confident about safety of accelerator driven systems.

In the publication "Conceptual Design of a Fast Neutron Operated Energy Amplifier", CERN/AT/95-44 (ET), C. Rubbia et al describe a beam pipe with an integrated, entirely passive, safety function. The beam pipe includes an emergency beam dump volume with an overflow device located slightly higher than the normal reactor coolant level. If the reactor coolant level rises due to the thermal expansion of the overheated coolant, the coolant flows through the overflow device into the beam dump volume. The proton beam is interrupted if enough coolant overflows into the beam dump volume.

A major drawback of this safety system is that its reliability may be impaired by too many parameters. The rate of thermal expansion of the coolant is driven by the reactor power. But the reactor power is decreasing with the rising coolant level in the emergency beam dump volume, so that the thermal expansion of the coolant and consequently the overflow is gradually decreasing. Whether the overflow stops before the power is down to a safe level or whether a further heating up of the system and a second overflow event will occur, has to be determined by complicated coupled reactor core and primary vessel thermo-hydraulics, together with a detailed neutronics calculation including a determination of the neutron source due to the spallation of coolant by the proton beam. In other words, exact working predictions of the above safety system require sophisticated calculations. Furthermore, the overflow rate of the coolant into the beam dump volume is dependent on the height of the coolant in the primary vessel and on the mean temperature increase of the total coolant volume. Assuming that the coolant heats up uniformly and that the vessel does not heat up and expand, one can calculate for a 25 m high coolant column a total thermal expansion of 28 cm per 100°C for lead and 36 cm for lead/bismuth. More recent designs use however a reactor vessel that is only half as high. The total coolant expansion would then only be 14 cm for lead and 18 cm for lead/bismuth per 100°C. In an accident leading to a very slow heating up of the coolant, the diameter of the reactor vessel would expand and the total axial coolant expansion would even be considerably less than the values given above. Whereas in a relatively fast heating up of the reactor core, with a time constant shorter than the round-trip time of the coolant, or in a "Loss-of-Flow" condition with the primary heat exchangers still removing heat at the top of the reactor vessel, a small amount of the coolant in the vicinity of the core may be considerably overheated, while the mean temperature of the total coolant volume does not vary much. Such a local overheating may lead to core damages before the coolant level rises significantly. Also in case of a vessel leak, the above described emergency beam dump volume would lose its function. The coolant level in the primary vessel would drop and the overflow device would no longer work. Similarly, in case of a loss of vacuum in the beam pipe, the emergency beam dump volume would no longer work.

### Object of the invention

The technical problem underlying the present invention is to provide a beam pipe for an accelerator-driven nuclear reactor with an improved integrated safety function. This problem is solved by a beam pipe as claimed in claim 1.

### General description of the invention

A beam pipe in accordance with the invention includes a temperature triggered flooding device for flooding the interior of the beam pipe with the coolant in case of overheating. This flooding device includes, below the normal coolant level in the vessel, a communication with the interior of the beam pipe. In an emergency situation leading to an abnormal temperature increase, the temperature triggered flooding device opens its submerged communication and the coolant fills the interior of the beam pipe in accordance with the principle of communicating vessels. In case of equal pressures in the vessel and in the beam pipe, the coolant will rise in the interior of the beam pipe up to the level of the coolant in the primary vessel. In most cases the pressure inside the beam pipe will be lower than the pressure in the primary vessel, so that the final coolant level inside the beam pipe will even be higher than the coolant level in the primary vessel. In any case, if the flooding device is triggered by an abnormal temperature increase, a coolant column will reliably build up in the beam pipe, creating a new target for the accelerated particle beam at the top of the coolant column, i.e. several meters above the reactor core. It will be appreciated that the beam pipe of the present invention provides a reliable safety function that is significantly affected neither by fluctuations of the coolant level in the reactor vessel, nor by the build-up of a counter-pressure inside the beam pipe. Finally, if the flooding device was erroneously activated during normal reactor operation, the accelerator driven reactor would be switched off and there would only be an economic penalty to replace or clean the beam pipe.

It will also be appreciated that if the flooding communication is located at a significant distance below the normal coolant level, the flooding device of the present invention will still reliably work if the reactor coolant level drops significantly, e.g. due to a leak in the reactor vessel. It will also be appreciated that the hydrostatic pressure urging the coolant through the communication into the interior of the beam pipe increases with the coolant height above the flooding communication.

In a preferred embodiment of the beam pipe, the temperature triggered flooding device includes temperature triggering means located at a short distance from the tip end of the beam pipe, i.e. at a short distance from the nuclear fuel target. It follows that the flooding device will be responsive to a temperature increase close to the nuclear fuel, so that it will respond promptly both to a slow and to a fast heating up of the reactor core.

The reliability of the integrated safety function of the beam pipe may be further increased by providing several temperature triggered flooding devices located at different distances from the tip end of the beam pipe.

The flooding device preferably includes an entirely passive temperature triggering device, such as for example a fuse or a bimetallic release device. This temperature triggering device triggers the opening of a flooding gate in the flooding communication. If triggered by its temperature triggering device this gate may for example open under the action of a spring and/or the action of the hydrostatic pressure produced by the coolant column in the primary vessel.

In a preferred, because very simple embodiment of the invention, the temperature triggered flooding device includes a melt-rupture disc, which is sealing the flooding communication between the vessel and the interior of the beam pipe. (It is pointed out that such a "melt-rupture disc" may be a body having any suitable form for sealing the flooding communication. It must not necessarily have the geometric form of a disc.) The material of this melt-rupture disc may be chosen so that it will soften (and subsequently rupture) or melt at a predetermined temperature, opening the flooding communication between the vessel and the interior of the beam pipe for the coolant. According to a preferred solution, the melt-rupture disc is sealingly fixed into a mating opening by a solder material that is chosen so as to free the melt-rupture disc at a predetermined temperature and to open thereby the flooding communication for the coolant.

In a preferred embodiment, stop means are provided for preventing the melt-rupture disc from being pushed through its opening from the interior to the exterior of the beam pipe. In other words, the stop means assure that the disc will be pushed inwardly into the beam pipe and will not fall into the reactor vessel, where its retrieval would be more complicated. The stop means may include for example a tapered mounting hole and/or a tapered melt-rupture disc.

When there is a vacuum in the beam pipe, the coolant flooding the beam pipe in an emergency case will rise above the level of the coolant in the reactor vessel. This part of the beam pipe would not be cooled by the coolant circulating in the reactor vessel and could be overheated if the proton beam were not switched off. (It will be appreciated in this context, that a rupture of the beam pipe would not be a major safety problem, because the coolant column will still protect the core from the proton beam.) To improve the conditions for cooling of the upper part of the beam pipe in case of flooding, the present invention suggests to include at least one melt-rupture disc above the normal coolant level, for equalising the coolant level inside and outside the beam pipe after the coolant has flooded the interior of the beam pipe through a submerged flooding device. Preferably there shall be a series of melt-rupture discs at different distances above the normal coolant level. These secondary melt-rupture discs could have a higher rupture temperature than the melt-rupture disc(s) below the normal coolant level in the primary vessel. Furthermore, these secondary melt-rupture discs should preferably be allowed to fall in both directions -i.e. into the beam pipe or into the primary vessel. The rupture of one or several of these discs, due to the heat generation of the impinging proton beam, should get the coolant level in the beam pipe down to the coolant level in the reactor vessel.

According to a further aspect of the present invention, the beam pipe has -in the region where the coolant level is likely to establish itself inside the beam pipe after flooding - a beam pipe portion having a significantly increased cross-section. This pipe portion with an increased cross section will help to avoid major damages to the beam pipe, when the proton beam impinges on the surface of the coolant column inside the beam pipe. Major damages to the beam pipe could indeed make its withdrawal difficult. A partial melting or explosion of the beam pipe would also generate steel debris falling in the reactor vessel. The efficiency of the above described beam pipe portion with an increased cross-section is advantageously increased by providing cooling fins at its outside.

### Detailed description with respect to the figures

The present invention will now be described, by way of example, with reference to the accompanying drawings, in which:
- Figure 1:: is a schematic section through an accelerator-driven system with a beam pipe in accordance with the present invention;
- Figure 2:: is a three-dimensional view of the lower end of the beam pipe of Figure 1;
- Figure 3:: is a three-dimensional cutout of a beam pipe in accordance with the present invention;
- Figure 4:: is a cross-section through the lower end of the beam pipe of Figure 1 and the cutout shown in Figure 3.

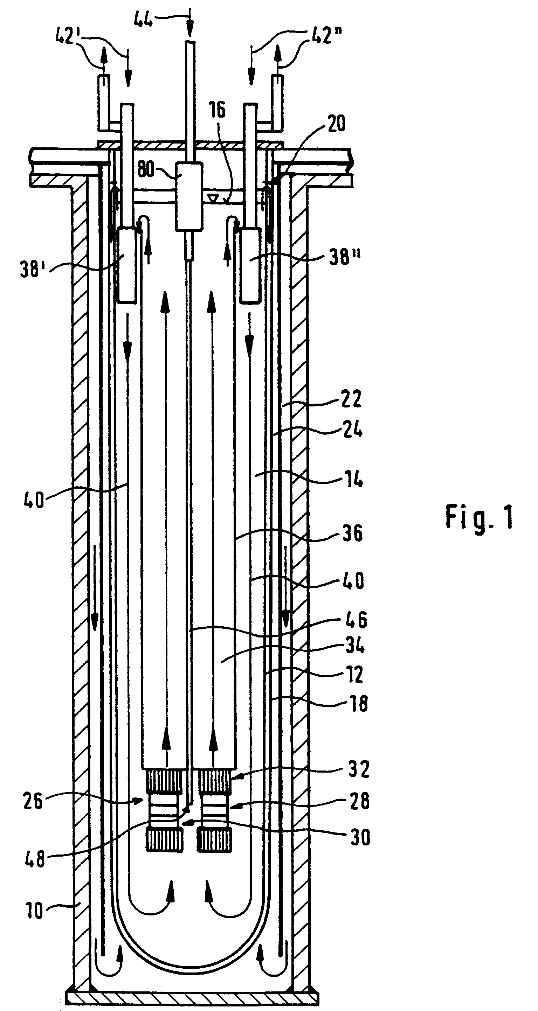

Figure 1 schematically shows a typical layout of a liquid metal cooled Accelerator-Driven (subcritical) System (ADS). This system is contained in a main vertical silo 10 which may have a height from 10 to 30 m. Reference number 12 indicates a primary vessel, which is filled with a heavy metal coolant 14, such as for example lead or a mixture lead/bismuth. The normal coolant level in the primary vessel 12 is indicated by reference number 16. The primary vessel 12 is contained in a containment vessel 18, which has among others the function to collect an overflow of the coolant 14 at the top of the primary vessel 12 (see overflow path indicated by reference number 20). An air cooling system comprising cold air downcomers 22 and hot air risers 24 is located between the outer wall of the containment vessel 18 and the inner wall of the main silo 10.

Reference number 26 globally indicates the core, comprising a nuclear fuel region, a spallation region and a plenum region. In the core region 26 the coolant 14 is heated up. The hot coolant 14 is then rising through a central chimney 34, which is separated from the rest of the primary vessel 12 by a thermal insulating wall 38, to the top end of the primary vessel 12. Here it passes through heat exchangers 38', 38'', which cool down the coolant 14 and create a cold, descending coolant stream 40 to the bottom end of the primary vessel 12, where the core 26 is located. Reference numbers 42', 42'' indicate the secondary cooling circuits of the heat exchangers 38', 38''.

The nuclear system is driven by a proton beam 44 which is guided by a beam pipe 46 through the coolant 14 into the lead or lead/bismuth spallation region 30 of the core 26. Such a beam pipe 46 may have a length of more than 30 m for an internal diameter of about 20 cm.

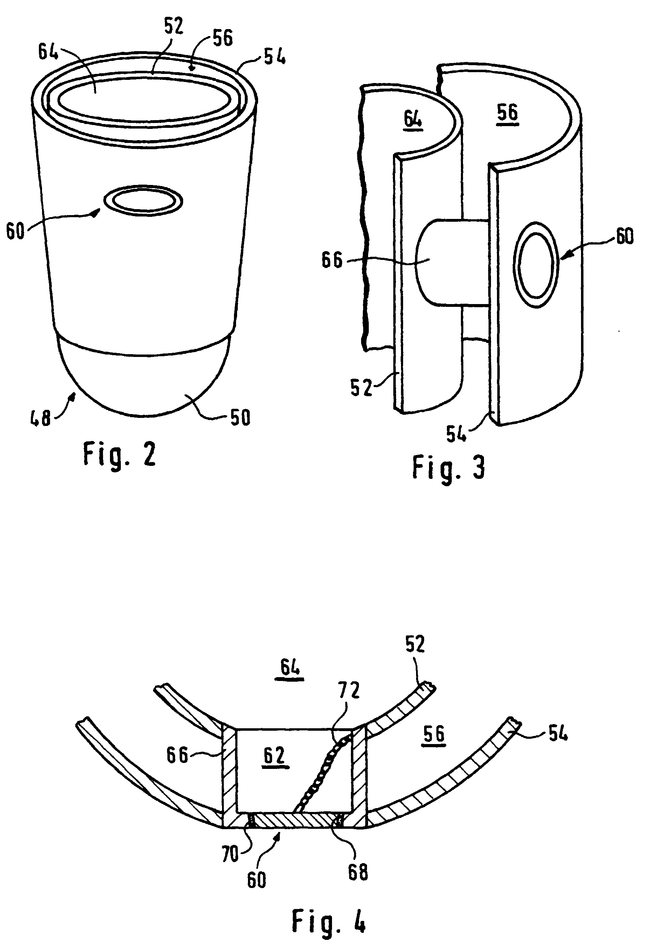

Figure 2 represents an enlarged view of the tip end 48 of the beam pipe 46. This tip end 48 is closed by a tungsten "window" 50, so that a relatively high vacuum can be maintained in the interior of the beam pipe 46. But it has also be suggested to use a beam pipe with a windowless tip end, in which a fast-moving lead/bismuth flow at the bottom of the pipe creates a pressure of a fraction of an atmosphere inside the beam pipe. Such or other embodiments of the tip end of the beam pipe 46 can of course also be used in combination with the present invention.

It will be noticed that the preferred beam pipe 46, of which details are shown in Figures 2 to 4, is a double-walled or jacketed pipe, comprising an inner pipe 52 for guiding the proton beam and an outer jacket 54. The jacket 54 is delimiting an annular gap 56 around the inner pipe 52 for receiving either a special cooling circuit or an insulation material.

In accordance with the invention a melt-rupture disc 60 is provided at a short distance from the tip end 48 of the beam (see Figure 2), i.e. well under the normal coolant level 16 in the primary vessel 12. The distance between the melt-rupture disc 60 and the core 26 will preferably be chosen great enough to avoid a high neutron flux and small enough to respond quickly to a heating up of the reactor core 26.

The melt-rupture disc 60 is sealing a passage or communication 62 extending from the primary vessel 12 into the interior 64 of the beam pipe (see Figure 4). In the preferred embodiment this passage 62 consists of a tube 66 bridging the annular gap 56 between jacket 54 and inner pipe 52. The melt-rupture disc 60 is sealingly soldered into a mating opening 68, wherein the solder material 70 is chosen so as to soften or melt at a predetermined temperature, thereby freeing the melt-rupture disc 60.

When the coolant 14 heats up in an emergency situation, the soldering material 70 around the melt-rupture disc 60 will consequently soften or melt. The considerable hydrostatic pressure acting from the coolant-side on the melt-rupture disc 60 will then push the latter into the interior of the beam pipe. After the melt-rupture disc 60 has been pushed inward, the beam pipe 46 will be flooded by the coolant 14 through the submerged passage 62. The coolant 14 will rise within the interior 64 of the beam pipe 46 up to the coolant level 16 in the primary vessel 12. If there is a vacuum within the interior 64 of the beam pipe 46, the final coolant level inside the beam pipe 46 will even be higher than the coolant level 16 in the primary vessel 12. In any case, a considerable liquid metal column will block the proton beam 44 from the core 26.

Attention will have to be paid to the choice of solder material 70. It should maintain its integrity at operating temperatures and should preferably become soft at 100-200°C above it. For a lead/bismuth coolant and a coolant temperature of 500°C at the core outlet, a silver solder (including also copper, zinc and possibly cadmium) could e.g. be used. In order to avoid a reaction with the coolant, the solder material 70 should be covered by a protective coating (e.g. a ceramic coating), so as to prevent a direct contact between the solder material 70 and the coolant 14.

In the embodiment shown in Figure 4, the melt-rupture disc 60 and its opening 68 are tapered from the interior to the exterior, so that the melt-rupture disc 60 has to fall inside the beam pipe 46 and may not be pushed through its opening 68 in the primary vessel 12. Furthermore, in order to make the retrieval of a released melt-rupture disc easier, it can be provided with an arrester chain or wire 72 attached e.g. to the beam pipe 64.

The reliability of the safety function of the beam pipe 46 may be further increased by providing a series of melt-rupture discs located at different distances from the tip end of the beam pipe. Figure 3 shows one of such melt-rupture discs 60 located between the tip end and the normal coolant level 16. The more melt-rupture discs 60 will open in an emergency case, the more rapidly the interior of the beam pipe 46 will be flooded.

It has already been said that in case of a vacuum in beam pipe 46, the coolant 14 flooding the interior 64 of the beam pipe 46 will rise above the level of the coolant in the primary vessel 12. It follows that the coolant column in the beam pipe will form a target surface for the proton beam above the level of the coolant in the primary vessel 12. The beam pipe shown in Figure 1 has in this region a beam pipe portion or chamber 80 with a significantly increased cross-section -by comparison with the main body of the beam pipe extending from the chamber 80 towards the tip end 48. It should be noted that the chamber 80 extends below the normal coolant level 16, so that its outside wall is cooled by the coolant 14 circulating in the primary vessel 12. In order to improve the efficiency of the cooling of chamber 80, this outside wall of the chamber 80 is advantageously provided with cooling fins (not shown), which extend into the coolant 14.

Alternatively to the chamber 80 or even in combination with the chamber 80, one can install one or several secondary melt-rupture discs (not shown) in the beam pipe 46, starting from the normal coolant level 16 up to the level to which the coolant 14 will rise in the beam pipe 46 because of a vacuum therein. These secondary melt-rupture discs should have a solder material with a higher melting point than that used in the submerged part of the beam pipe 46 and they should be preferably allowed to fall in both directions -i.e. either into the beam pipe or into the primary vessel 12. The rupture of several of these secondary melt-rupture discs, due to heat generation of the proton beam (which may generate more than 10 MW) impinging on the top surface of the coolant column in the beam pipe 46, will lower the coolant level in the beam pipe 46 to the coolant level in the primary vessel 12 and thereby improve evacuation of the heat generated by the proton beam, which is impinging on the coolant column in the beam pipe 46.

It should be appreciated that the beam pipe described above provides a safety function in an accelerator driven system that has following advantages:
a) It works in a fully passive way.
b) It is simple and easy to understand.
c) It leads to a quick filling of the beam pipe 46 with liquid metal coolant at least up to the coolant level in the primary vessel 12, thus maximizing the blocking of the proton beam.
d) Its response is keyed to the temperature increase close to the top of the core. Therefore it will respond promptly both to a slow and a fast heating up of the reactor core.
e) It would still reliably work if the reactor coolant level were low, e.g. due to a leak in the reactor vessel.
f) It would still reliably work if a counter-pressure were to build up in the beam pipe.
g) If the melt-rupture disc was erroneously activated during normal reactor operation (e.g. through an unforeseen degradation of the solder), the ADS would be switched off and there would only be an economic penalty to replace or clean the beam pipe.

## Claims

1. Beam pipe for guiding in an accelerator-driven nuclear system an accelerated particle beam (44) onto a nuclear fuel target (26) through a vessel (12), wherein said vessel is filled up to a normal coolant level (16) with a coolant (14),
**characterised by** a temperature triggered flooding device (60, 68, 70, 62) for establishing, in case of an abnormal temperature increase in said system, below said normal coolant level (16), a flooding communication (70, 62) between said vessel (12) and the interior of the beam pipe (46), thereby flooding the interior (64) of the beam pipe (46) with the coolant (14) con tained in said vessel (12).

2. Beam pipe as claimed claim in 1, characterised in that said flooding communication (70, 62) is located at a significant distance below the normal coolant level (16) in said vessel (12).

3. Beam pipe as claimed in claim 1 or 2, characterised in that said temperature triggered flooding device includes a temperature triggering means (70) located at a short distance from the tip end (48) of the beam pipe.

4. Beam pipe as claimed in any one of claims 1 to 3, characterised by several temperature triggered flooding devices located at different distances from the tip end (48) of the beam pipe.

5. Beam pipe as claimed in any one of claims 1 to 4, characterised in that said temperature triggered flooding device includes a melt-rupture disc (60), which is sealing said flooding communication (62, 68) for said coolant (14).

6. Beam pipe as claimed in claim 5, characterised in that the material of said melt-rupture disc (60) is chosen so that the melt-rupture disc will soften or melt at a predetermined temperature, opening said flooding communication (62, 68) for said coolant (14).

7. Beam pipe as claimed in claim 4, characterised in that said melt-rupture disc (60) is sealingly fixed into an opening (68) in said flooding communication (62, 68) by a solder material (70), said solder material (70) being chosen so as to free said melt-rupture disc (60) at a predetermined temperature and to open thereby said flooding communication (62, 68) for said coolant.

8. Beam pipe as claimed in claim 7, characterised in that said solder material (70) is covered by a protective coating, so as to prevent a direct contact between said solder material and said coolant (14).

9. Beam pipe as claimed in claim 8, characterised in that said coating is a ceramic material.

10. Beam pipe as claimed in any one of claims 7 to 9, characterised by stop means for preventing said melt-rupture disc (60) from being pushed through its opening (68) from the interior to the exterior of said beam pipe.

11. Beam pipe as claimed in claim 10, characterised in that said stop means comprises a tapered mounting hole (68) for said melt-rupture disc (60).

12. Beam pipe as claimed in claim 10 or 11, characterised in that said stop means comprises a tapered melt-rupture disc (60).

13. Beam pipe as claimed in any one of claims 7 to 12, characterised by an arrester chain or wire (62) attached to said melt-rupture disc (60).

14. Beam pipe as claimed in any one of claims 1 to 13, characterised by at least one melt-rupture disc located above the normal coolant level (16), to equalise the coolant level inside and outside the beam pipe after the coolant has flooded the interior (64) of the beam pipe (46) through a submerged flooding device.

15. Beam pipe as claimed in any one of claims 1 to 14, characterised by a beam pipe portion (80) having a significantly increased cross-section in the region where the coolant level is likely to establish itself in the interior of the beam pipe (46) after the latter is flooded.

16. Beam pipe as claimed in claim 15, characterised by cooling fins at the outside of said beam pipe portion (80) with said significantly increased cross-section.
